Europäisches Patentamt

European Patent Office

Office européen des brevets

(11) Publication number: **0 045 207**
A1

# EUROPEAN PATENT APPLICATION

(21) Application number: 81303434.5

(22) Date of filing: 27.07.81

(51) Int. Cl.³: **C 21 D 1/68**
// C21D9/00, B21B47/04

(30) Priority: 30.07.80 GB 8024967
09.01.81 GB 8100593

(43) Date of publication of application: 03.02.82
Bulletin 82/5

(84) Designated Contracting States: **AT BE DE FR GB IT LU
NL SE**

(71) Applicant: **MOLDLINE LIMITED, Aston Lane, Sharnford
near Hinckley Leicester (GB)**

(72) Inventor: **Chappell, John Johnson,
Chimneys 345 Lichfield Street Bonehill, Temworth
Staffordshire (GB)**

(74) Representative: **Tebbit, Antony Hugh Edward et al, Hyde,
Heide & O'Donnell 2 Serjeants' Inn, London EC4Y 1LL
(GB)**

(54) **Protecting steel during heat treatment.**

(57) In order to reduce loss from a steel article due to
scaling when it is subjected to a treatment involving heat-
ing, for example annealing or hot rolling, a coating compo-
sition is applied to the article to form thereon a coating
comprising finely divided iron oxide particles. Preferred
coating compositions include red mud which is a residue
left after the extraction of alumina from bauxite, and flue
dust from an iron- or steel-melting furnace.

This invention relates to a method of protecting steel articles during heat treatment and particularly but not exclusively to limiting steel loss due to scaling of steel billets and preventing adhesion of the billets to each other during annealing or other treatment involving heating of the steel.

A problem which occurs in all annealing furnaces is that of scale forming on the surfaces of steel billets due to contact with the air leading to excessive wastage of steel. The scale formed is generally black iron oxide, and up to $2\frac{1}{2}\%$ by weight of the steel in a billet is normally lost during re-heating due to the formation of this iron oxide scale. It will be appreciated that many tonnes wastage occurs when considering the high quantities of steel produced world wide. Many attempts have been made to reduce loss by scaling and to this end a method was devised which entailed the application to the billets of a mixture of metallic aluminium or silicon and refractory material with the intention that the aluminium or silicon should oxidise preferentially and form an impervious coating to prevent oxidation of the steel. However, this method was found to be unsuccessful.

One object of the invention is to reduce steel loss due to scale formation and thus provide a saving of useful steel.

In known annealing methods steel billets may be moved through a furnace by intermittent movement along a flat plate, or continuously on a slow moving conveyor. The apparatus for carrying out these methods are known in the steel industry as walking beam furnaces or pusher furnaces.

A common problem which has existed for many years occurring in a pusher furnace is that the billets can become fast with each other so that as each one emerges from the furnace it has to be mechanically detached from the preceding billet which has been pushing the emerged billet through the furnace.

This is clearly inconvenient and adds to the cost of steel production.

It is a further object of the invention to reduce the tendency of steel articles to adhere to one another should they be in contact during heat treatment.

According to the present invention, there is provided a method of protecting a steel article during treatment involving heating of the steel characterised in that prior to such heat treatment a coating composition is applied to said article to form thereon a coating comprising finely divided iron oxide particles.

It has been found that the loss of steel from the article due to scaling is reduced when such a coating is present, and further that such coated surfaces have a reduced tendency

to stick together should they come into contact during heat treatment of the steel articles. Of course the benefits afforded by working in accordance with this invention are greater when greater proportions of the surface area of the article to be heat-treated are so coated and it is accordingly preferred that substantially the whole surface of the article is coated.

The precise way in which such a coating operates to protect the steel against the effects of scaling is not clearly known, but it is presently believed that in the formation of iron oxide scaling which takes place when making use of the present invention, the iron in the scaling preferentially derives at least in part from the coating rather than from the article itself. Also, the coating can give rise to a uniform coating of scale which then protects the article itself against further scale formation.

The iron oxide particles in the coating may be applied to the steel article in any convenient way, for example by dusting the article (which may be pre-coated with a binder if desired) with dry iron oxide, but it is much preferred that the coating composition should comprise finely divided solids in a binder. The article to be protected may then be coated with the coating composition by brushing, spraying or dipping according to which is most convenient in any particular plant.

It is by no means necessary that the solids of a coating composition for use according to the invention should consist wholly of iron oxide particles, and good results have been achieved when the iron oxide particles constitute only a minor proportion of the coating composition solids.

In preferred embodiments of the invention, the coating composition comprises finely divided solids in a binder and the finely divided iron oxide particles amount to at least 30%, and optimally at least 50%, by weight of such solids.

When a binder is used, this can be of any desired fluid, for example organic (oil-based) binders may be used, but preferably said binder is aqueous. The aqueous binder may be simply any available water or it may be water to which has been added hydrated sodium silicate or some other material to promote binding. The use of ordinary water (which need not be clean water) is however perfectly satisfactory and least costly.

The size of the finely divided iron oxide particles can have an important effect on the magnitude of the advantages afforded by the present invention, and it is accordingly preferred that the said oxide particles are of a size to pass a 300 British Standard mesh screen.

The iron oxide particles used to form a coating in accordance with this invention can be derived from a variety of sources. Bearing in mind that the finely divided iron oxide particles need not be chemically pure it is desirable to use as cheap a source as possible. It is especially desirable to make use of industrial waste products which could otherwise present problems in their disposal.

In some preferred embodiments of the present invention, the coating composition comprises red mud. The expression 'red mud' is used herein to denote a pretreatment residue which results from the extraction of alumina from bauxite or other alumina bearing earths such as laterites. Such red mud when dry, usually analyses out as containing by weight 10 to 25% alumina which has resisted extraction together with 20 to 60% ferric oxide, the balance being made up of titania, silica, lime and soda. There is often a loss on ignition during analysis of between 5 and 20% which may be said to be mostly water. Ghanaian and French bauxites, for example, often give rise to red muds whose iron oxide content is from 50 to 60% by weight of the total solids content.

Composition of some typical bauxites are given in the following table. The figures are expressed as percentages by weight, and the fact that they do not add to 100 is attributed to minor inaccuracies in analysis.

| Bauxite origin | Arkansas High SiO$_2$ | Arkansas Low SiO$_2$ | Surinam | Caribbean |
|---|---|---|---|---|
| Al$_2$O$_3$ | 57.3 | 50.6 | 55.5 | 47.6 |
| Fe$_2$O$_3$ | 4.2 | 6.8 | 9.8 | 20.9 |
| SiO$_2$ | 6.7 | 12.4 | 2.3 | 2.3 |
| TiO$_2$ | 2.0 | 2.2 | 2.5 | 2.6 |
| Loss on ignition | 29.9 | 26.8 | 29.7 | 25.4 |
| | 100.1 | 98.8 | 99.8 | 98.8 |

Similar analyses of red muds derived from these and other bauxites are given in the following table (dry weight analysis).

| Red Mud Origin | Arkansas Low SiO$_2$ | Arkansas High SiO$_2$ | Surinam | Caribbean | Ghana | France |
|---|---|---|---|---|---|---|
| Al$_2$O$_3$ | 22.1 | 27.5 | 15.3 | 22.0 | 16.2 | 15.5 |
| Fe$_2$O$_3$ | 10.3 | 11.4 | 33.1 | 46.8 | 53.2 | 55.0 |
| SiO$_2$ | 14.9 | 21.1 | 8.5 | 5.0 | 5.4 | 8.3 |
| TiO$_2$ | 4.4 | 3.7 | 9.9 | 6.1 | 7.3 | 8.1 |
| CaO | 18.5 | 8.1 | 12.3 | 4.9 | 2.7 | 1.0 |
| Na$_2$O | 8.4 | 11.5 | 4.2 | 2.8 | 4.5 | 6.0 |
| Loss on ignition | 18.8 | 13.1 | 16.8 | 11.0 | 10.6 | 6.0 |
| | 97.4 | 96.4 | 100.1 | 98.6 | 99.9 | 99.9 |

It will be noted that the red mud derived from low silica Arkansas bauxite only contains 10.3% by weight iron oxide but even this low proportion can give valuable results when operating according to the invention. Of course a greater reduction in steel loss due to s aling would be afforded by using for example Ghanaian or French bauxite, but this greater advantage must be balanced against the cost of transporting the red mud from an aluminium smelter to the steel works where the present invention is to be employed. It may well be that the greatest economic advantage for any particular steel works when using red mud will be achieved by using the red mud obtained from its closest aluminium smelter. A further advantage of using red mud is that a very high proportion of it is of very small (6 microns or less) particle size which is particularly conducive to the formation of a uniform protective coating.

Alternatively, or in addition, it is especially preferred that such coating composition comprises flue dust from an iron- or steel-melting furnace. Such flue dust can arise from fumes generated in furnace melting and in the production of iron and steel for example in arc and blast furnaces and in Linz-Doniewicz and other converters, and basic oxygen furnaces. Such flue dust is also of extremely small granulometry and is often collected as sludge or dust from wet or dry precipitators or filters.

The flue dust may be black or red in colour and can contain free iron as well as various oxides. The dust may also contain tramp elements such as silicon, zinc and lead which may have been present in scrap metal added during melting to control the temperature of the melt or for other reasons. Lime and carbon may also be present in the dust.

In yet other preferred embodiments of the invention, the coating composition comprises at least one finely divided iron ore. Iron ores are also an inexpensive source of iron oxides. By way of example, the iron ore used may be a red iron ore such as haematite or a black iron ore such as Itabira or Kiruna Other iron-rich earths such as iron-rich laterite deposits may also be used.

Sludges resulting from the pickling of steel where the iron will exist predominantly as chloride or sulphate may also be used.

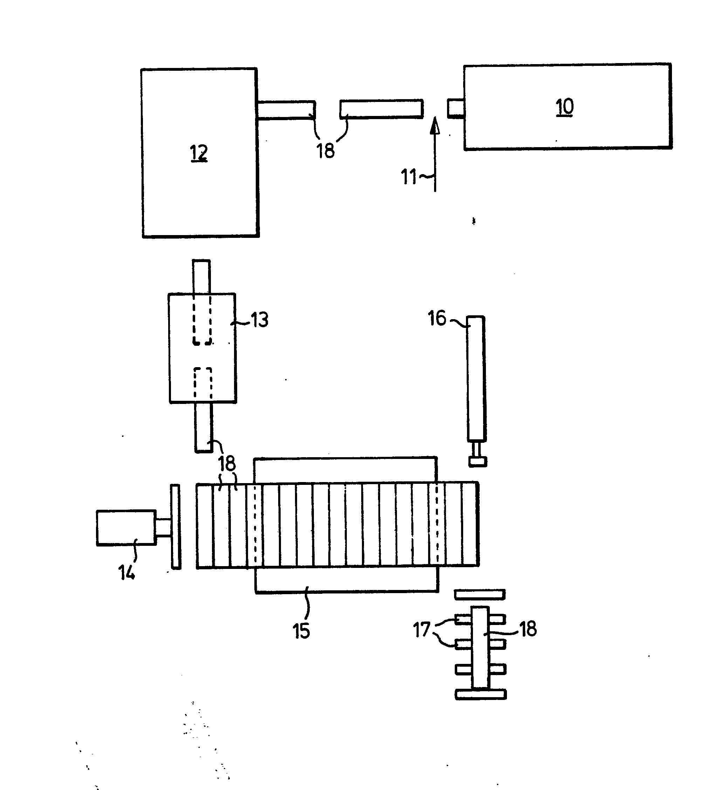

The invention will now be described by way of example with reference to the accompanying drawing showing a schematic plan of apparatus for carrying out the method of the present invention.

Steel billets are produced in known manner by a continuous casting machine 10. The continuous casting is severed at 11 and individual billets 18 are stockpiled at 12 for a length of time, preferably 15 - 25 hours. The billets which have cooled to a temperature of between 600 - 700°C are fed one by one through a spraying cabin 13 containing a ring spray system and means for turning the billets, where they are coated with red mud or other iron oxide containing coating composition.

The red mud or other coating composition used may be a concentrated form, but is preferably diluted, for example with water, to a paint-like consistency.

The coated billets emerging from the cabin 13 are moved transversely of their axes by means of a reciprocating ram 14 into a pusher furnace 15 where they are annealed. The billets are advanced intermittently and each one effects movement of the preceding billet by engagement of mutually contacting surfaces. The billets are once again moved axially of their length after annealing by means of a further reciprocating ram 16 and are conveyed away on rollers 17. The billets as they leave the furnace 15 are not stuck fast to each other and move freely under the action of the ram 16.

Instead of spraying the billets may be dipped in a bath of red mud or other iron oxide containing coating composition.

A sample number of billets was tested in the following manner:

Four billets taken from the continuous casting machine were weighed and divided into two groups of two. The billets of one group were coated over their entire surfaces with red mud and those of the other group left uncoated. The two groups were passed successively through the furnace, each billet with an identical heating cycle. The coated billets were shot blasted free of red mud and scale, and all four billets reweighed. The results are set out in the tables below:

Uncoated Samples:

| | Weight before heating | Weight after heating | %weight loss |
|---|---|---|---|
| 1. | 1870 Kg | 1846 Kg | 1.28 |
| 2. | 1582 Kg | 1554 Kg | 1.77 |
| total | 3452 Kg | 3400 Kg | 1.51 |
| average | 1726 Kg | 1700 Kg | 1.51 |

Coated Samples:

| | Weight before heating | Weight after heating | %weight loss |
|---|---|---|---|
| 1. | 1934 Kg | 1918 Kg | 0.82 |
| 2. | 1580 Kg | 1561 Kg | 1.20 |
| total | 3514 Kg | 3479 Kg | 0.99 |
| average | 1757 Kg | 1740 Kg | 0.99 |

It will be noted from the tables that the average total % loss in weight of the treated billets is substantially improved over that for the untreated billets, thus demonstrating that both the advantages of case of separation and reduction of sealing with consequent saving of steel are achieved.

Similar results are achieved if the red mud coating composition is replaced by a flue dust slurry or finely divided iron ore.

The invention has so far been described with particular reference to the annealing of steel billets, but it also has advantages when used in other treatments involving the heating of steel. Of such other treatments, particular reference is made to hot rolling processes whether of sheet, bar or rod stock. Here again steel loss due to scale formation is reduced, and other advantages also become apparent, in particular — such scale as does form is more easy to remove from the steel between rolling treatments so that the risk of such scale being rolled into the surface of the article to form a surface defect is reduced.

0045207

- 12 -

## C L A I M S

1. A method of protecting a steel article during treatment involving heating of the steel characterised in that prior to such heat treatment a coating composition is applied to said article to form thereon a coating comprising finely divided iron oxide particles.

2. A method according to claim 1, wherein substantially the whole surface of the article is so coated.

3. A method according to claim 1 or 2, wherein such coating composition comprises finely divided solids in a binder.

4. A method according to claim 3 wherein said iron oxide particles amount to at least 30% by weight of said solids.

5. A method according to claims 3 or 4, wherein said binder is aqueous.

6. A method according to any preceding claim, wherein said iron oxide particles are of a size to pass a 300 British Standard mesh screen.

7.    A method according to any preceding claim, wherein such coating composition comprises red mud as herein defined.

8.    A method according to any preceding claim, wherein such coating composition comprises flue dust from an iron- or steel-melting furnace.

9.    A method according to any preceding claim, wherein such coating composition comprises at least one finely divided iron ore.

10.    A method according to claim 1 and substantially as herein described.

12

18

11~

10

13

16

18

14

15

17

18

European Patent
Office

**EUROPEAN SEARCH REPORT**

0045207

Application number

EP 81 30 3434

## DOCUMENTS CONSIDERED TO BE RELEVANT

| Category | Citation of document with indication, where appropriate, of relevant passages | Relevant to claim |
|---|---|---|
| X | EP - A - 0 007 014 (BROWN, BOVERI & CIE) <br> * Whole document * <br> -- | 1-6, 8-10 |
| X | DE - C - 937 282 (THEODOR WUPPERMANN) <br> * Claims 1,3 * <br> -- | 1-5, 9,10 |
| X | GB - A - 1 032 271 (SCHLOEMANN) <br> * Claims 19,12-14 * <br> -- | 1-6, 9,10 |
| X | GB - A - 1 125 623 (SCHLOEMANN) <br> * Claims 1,7-12,23,24; page 6 * <br> ---- | 1-6,9, 10 |

**CLASSIFICATION OF THE APPLICATION (Int. Cl.³)**

C 21 D 1/68//
C 21 D 9/00
B 21 B 47/04

**TECHNICAL FIELDS SEARCHED (Int. Cl.³)**

C 21 D
B 23 K

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 21-10-1981 | MOLLET |

EPO Form 1503.1 06.78